**Europäisches Patentamt**

**European Patent Office**

**Office européen des brevets**

(11) Veröffentlichungsnummer: **0 188 402**

**A1**

(12) # EUROPÄISCHE PATENTANMELDUNG

(21) Anmeldenummer: **86810016.5**

(22) Anmeldetag: **15.01.86**

(51) Int. Cl.⁴: **F 16 H 25/22**

(30) Priorität: **17.01.85 CH 209/85**

(43) Veröffentlichungstag der Anmeldung:
**23.07.86 Patentblatt 86/30**

(84) Benannte Vertragsstaaten:
**AT BE CH DE FR GB IT LI LU NL SE**

(71) Anmelder: **Gewinde Ziegler AG
Subingenstrasse 149
CH-4511 Horriwil(CH)**

(72) Erfinder: **Güdel, Alfred
Birkenweg
CH-4900 Langenthal(CH)**

(74) Vertreter: **Gasser, François W.
Hirschengraben 10 Postfach 1555
CH-3001 Bern(CH)**

(54) **Verbesserter Gewinde-Satelliten-Antrieb.**

(57) Durch das Anbringen einer Mehrzahl von Ausgleichsnuten (9) z.B. in der Mutter (3) des Antriebes ist es möglich, jeden Satelliten (2) regelmässig von Belastungen, die durch Masstoleranzen der einzelnen Komponenten herrühren, zu entlasten, bevor diese Belastungen Werte erreichen, die zur Zerstörung der Gewinde (1a, 2a, 3a) oder Versahnungen (3b) führen. Damit wird ein idealer Satelliten-Antrieb geschaffen.

Fig. 1

EP 0 188 402 A1

## VERBESSERTER GEWINDE-SATELLITEN-ANTRIEB

Die vorliegende Erfindung betrifft einen verbesserten Gewinde-Satelliten-Antrieb gemäss dem Oberbegriff des Patentanspruches 1.

Gewinde-Satelliten-Antriebe mit zentral angeordneter Gewindespindel, um die herum gleichmässig verteilt Satelliten angeordnet sind, die sowohl mit der Spindel als auch einer aussen liegenden, innenverzahnten Mutter im Eingriff stehen, sind bekannt und werden auf dem Markt teilweise als Rollen- oder Planetenrollenspindeln bezeichnet. Angesichts der Tatsache, dass die Satelliten einerseits über ihre ganze Länge mit ihrem Gewinde mit dem Gewinde der zentral angeordneten Spindel und andererseits mit ihren Endbereichen, die zusätzlich zum Gewinde eine Verzahnung aufweisen, mit der Innenverzahnung der aussen angeordneten Mutter im Eingriff stehen, um parallel zu der Längsachse der Spindel und der Mutter gehalten zu werden, müssen sämtliche Teile und insbesondere die Gewinde und Zahnungen äusserst präzise gearbeitet sein, so dass die beiden sich durch die Eingriffe Spindel/Satellit und Satellit-Verzahnung/Mutter-Innenverzahnung ergebenden Uebersetzungen identisch sind. Theoretisch müssten beide Uebersetzungsverhältnisse unabhängig vom Belastungszustand des Antriebes immer genau dem mathematischen Uebersetzungsverhältnis entsprechen, was in der Praxis aber unmöglich realisiert werden kann. Daher weisen derartige Gewinde Satelliten-Antriebe, zumindest bei hohen zu übertragenden Kräften, recht kurze Lebensdauern auf, da sich alle Massfehler in den Eingriffen summieren und zwangsläufig zu unterschiedlichen Uebersetzungsverhältnissen und damit zu punktuellen Ueberbelastungen des Materials führen, was zur Zerstörung der Antriebe führt, da eine Abweichung eines einzelnen Teilkreisdurchmessers von nur 1/100 mm
pro hundert Umdrehungen eines Satelliten einen Abwälzfehler von 3,14 mm bewirkt, der wegen der festen
Eingriffe nicht kompensiert werden kann.

Um diese Nachteile zu eliminieren, wurden Gewindespindel-Muttern entwickelt, die ohne Verzahnung der Enden
der Satellitenrollen auskommen, so dass Unterschiede
in den Uebersetzungsverhältnissen lediglich noch zwischen Spindel & Satelliten und Satelliten & Mutter
auftreten können, welche sich aber automatisch durch
eine axiale Verschiebung der Satelliten ausgleichen.
Derartige Antriebe können aber nur für kleine Steigungen hergestellt werden und die Satelliten müssen
nach jeder Drehung um die zentrale Gewindespindel um
eine Rillendistanz in der Längsrichtung verschoben
werden, um sich bezüglich der aussen laufenden Mutter
nicht übermässig axial zu verschieben. Diese Längsbewegungen der Satelliten verunmöglichen hohe Drehzahlen
und verursachen Lärm. Zudem bedürfen solche Antriebe
eines Käfigs, der die Satelliten parallel zur Längsachse der Spindel und der Mutter hält. Die sich daraus
ergebenden konstruktiven und verwendungsmässigen Nachteile werden teilweise dadurch kompensiert, dass derartige Antriebe auch grosse Belastungen aufnehmen können.

Bis heute fehlt aber ein Gewinde-Satelliten-Antrieb,
der die Vorteile der beiden vorerwähnten Antriebstypen
verbindet, ohne deren Nachteile aufzuweisen.

Der vorliegenden Erfindung liegt daher die Aufgabe zugrunde, einen verbesserten Gewinde-Satelliten-Antrieb
zu realisieren, der die Vorteile der Rollengewindespindeln mit jenen der Gewindespindel-Muttern verbindet, ohne deren Nachteile zu übernehmen oder gar zu summieren und so einen Antrieb für hohe Belastungen und grosse Drehzahlen zu schaffen, der auch unter ungünstigen Einsatzbedingungen punktuelle Ueberbelastungen des Materials verhindert.

Erfindungsgemäss wird diese Aufgabe durch einen verbesserten Gewinde-Satelliten-Antrieb gemäss dem Patentanspruch 1 gelöst.

In der folgenden Beschreibung wird die Erfindung anhand der Zeichnung einer vorteilhaften Ausführungsform erläutert. In der Zeichnung zeigt:

Fig. 1 den Antrieb teilweise im Querschnitt, teilweise in Frontansicht mit partiell weggebrochener Abdeckung, und

Fig. 2 einen Längsschnitt durch den Antrieb, mit ungeschnittener Gewindespindel.

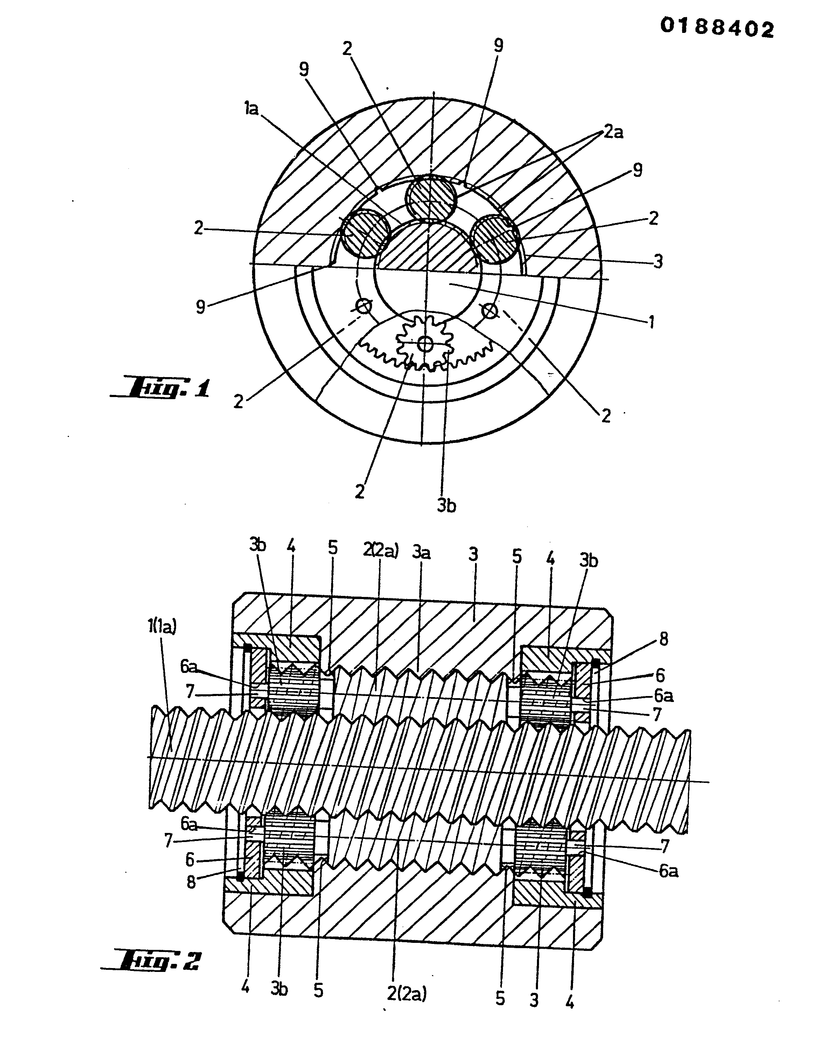

Man erkennt in Fig. 1 eine zentrale Gewindespindel 1 mit Aussengewinde 1a, rund um die gleichmässig verteilt Satelliten 2, hier deren sechs, angeordnet sind, die Aussengewinde 2a aufweisen, die mit jenen der Spindel 1 übereinstimmen, so dass die Satelliten 2 auf der Spindel 1 abrollen können und mit ihr im Eingriff stehen. Koaxial zur Spindel 1 befindet sich eine Mutter 3, die ein Innengewinde 3a trägt, das mit allen Satelliten 2 im Eingriff steht. Dadurch sind die Satelliten 2 sowohl zentral innen wie auch aussen geführt und rollen in den Gewinden 1a und 3a ab.

Aus Fig. 2 erkennt man, dass die Satelliten 2 an ihren Enden zusätzlich zu den Aussengewinden 2a noch je eine Verzahnung 3b tragen, die mit Innenzahnkränzen 4, die fest mit der Mutter 3 verbunden sind, in Eingriff stehen. Vorteilhafterweise sind dabei die Verzahnungen

- 4 -

3b durch Ringnuten 5 von den nur die Gewinde 2a tragenden mittleren Bereichen der Satelliten 2 abgesetzt. Um zu verhindern, dass Schmutz in die Mutter 3 eindringt, ist diese an ihren beiden Enden mit Abdeckungen 6 versehen, in Löchern 6a von welchen Zapfen 7 der Satelliten 2 gelagert sind. Vorteilhafterweise sind die Abdeckungen 6 mittels Seegerringen 8 gesichert.

Soweit entspricht der erfindungsgemässe Gewinde-Satelliten-Antrieb konstruktiv jenen, die heute handelsüblich sind. Er unterscheidet sich von diesen aber dadurch, dass er Ausgleichsnuten 9 aufweist (Fig. 1), in denen sich die Satelliten 2 regelmässig derart frei um ihre Längsachse drehen können, dass sämtliche Belastungen, die durch die unterschiedlichen Uebersetzungsverhältnisse entstehen, kompensiert werden können.

In der hier dargestellten Ausführungsvariante der Erfindung sind, gemäss Fig. 1, die Ausgleichsnuten 9 innen an der Mutter 3 angebracht und erstrecken sich über deren gesamten, das Innengewinde 3a aufweisenden Bereich. Vorteilhafterweise sind mehrere derartige Ausgleichsnuten 9 über den Umfang der Mutter 3 verteilt, derart, dass nie mehr als ein Satellit 2 gleichzeitig in einer Ausgleichsnute 9 liegt, die Belastungen der Gewinde und Zahnungen aber einen vorbestimmten kleinen Maximalwert nicht übersteigen können. Diese sind vorteilhafterweise so dimensioniert, dass beim Lauf des Antriebes regelmässig jeder Satellit 2 kurzfristig aus dem Eingriff mit dem Innengewinde 3a der Mutter 3 fällt. Dies ermöglicht ihm, die durch den Eingriff mit dem Aussengewinde 1a der Spindel 1 und die Verzahnung 3b der Innenzahnkränze 4 festgelegte Drehlage einzunehmen und die durch Masstoleranzen resp. Unterschiede in den Uebersetzungsverhältnissen Spindel/Satellit und Satelliten-Verzahnung/
Innenzahnkränze hervorgerufene Belastung regelmässig
abzubauen, bevor er mit dem Innengewinde 3a der Mutter
3 erneut in Eingriff kommt. Durch die Anordnung solcher Ausgleichsnuten 9 wird demnach verhindert,
dass sich Belastungen zwischen den Gewinden und Verzahnungen aufbauen, resp. über ein vorgegebenes Mass,
das zu deren Zerstörung führen könnte, aufbauen, indem
jeder Satellit 2 vorteilhafterweise mehrmals pro Umgang um die Spindel 1 in eine belastungsfreie Drehlage
zurückgebracht wird. Vorteilhafterweise werden, wenn
die Anzahl der Satelliten 2 gleich "n" gesetzt wird,
n + 1 oder n - 1 Ausgleichsnuten 9 in der Mutter 3
vorgesehen. Selbstverständlich sind auch andere Ausgleichsnutenzahlen realisierbar. Es muss dabei lediglich darauf Acht gegeben werden, dass vorteilhafterweise nie mehr als eine oder eine vorbestimmte, durch
die Festigkeit der einzelnen Antriebskomponenten vorgesehene Zahl von Satelliten 2 in Ausgleichsnuten 9
frei drehen, resp. gleichzeitig in solche zu liegen
kommen.

Damit ist die der vorliegenden Erfindung zugrunde liegende Aufgabe optimal und mit einfachsten Mitteln gelöst und der erfindungsgemässe Antrieb vereinigt die
Vorteile der bekannten Satelliten-Antriebe, ohne deren
Nachteile aufzuweisen.

Dank der erfindungsgemäss geschaffenen Möglichkeit,
Belastungszustände bei den einzelnen Satelliten in
einem Gewinde-Satelliten-Antrieb regelmässig vor dem
Erreichen kritischer Werte auszugleichen, ist es auch
möglich, die Anforderungen an die Masshaltigkeit der
einzelnen Antriebs-Komponenten zu verringern, da sich
Massfehler nicht mehr über längere Betriebszeiten aufsummieren. Die Herstellungskosten solcher Antriebe
können daher reduziert werden.

- 6 -

Praktische Versuche haben gezeigt, dass es dank der Erfindung auch möglich ist, Gewinde-Satelliten-Antriebe zu bauen, die wie die bekannten Gewindespindel-Muttern ohne Verzahnungen an den Satellitenenden und ohne Innenzahnkränze an den Muttern auskommen, ohne dass sie die diesen bekannten Antrieben inherenten Nachteile aufweisen. Bei genügender Anzahl von Ausgleichsnuten übernehmen diese die Funktion des parellelen Ausrichtens der Satelliten. Eine Lärmentwicklung entsteht entgegen den Gewindespindel-Muttern nicht und die Satelliten richten sich selbständig und führen nur minimale Längsbewegungen aus, so dass derartige erfindungsgemässe Antriebe mit den herkömmlichen nicht vergleichbar sind.

Selbstverständlich lassen sich auch andere Mittel als die Ausgleichsnuten 9 vorsehen, um ein kurzfristiges ausser Eingriff kommen der Satelliten 2 mit entweder der Spindel 1 oder der Mutter 3 zu realisieren. Solche Mittel können beispielsweise Abflachungen und Ausfräsungen sein, aber auch durch bewusst unrund gehaltene Teile (Spindel und/oder Satelliten und/oder Mutter) realisiert werden.

Die Erfindung ermöglicht erstmals, einen Satelliten-Antrieb zu schaffen, der trotz den mechanisch bedingten Massungenauigkeiten, dem mathematisch korrekten Satelliten-Antrieb in seiner Funktion sehr nahe kommt,

PATENTANSPRUECHE

1) Gewinde-Satelliten-Antrieb mit zentraler Gewindespindel (1) und um diese herum gleichmässig verteilten Satelliten (2) in Form von mit Aussengewinden (2a) versehenen Rollen, aussen um welche herum
   eine ein Innengewinde (3a) tragende Mutter (3) angeordnet ist, derart, dass Spindel (1), Satelliten
   (2) und Mutter (3) parallele Längsachsen aufweisen
   und die Satelliten (2) gleichzeitig mit der Gewindespindel (1) und der Mutter (3) im Eingriff stehen, dadurch gekennzeichnet, dass parallel zu den
   Längsachsen der Spindel (1) und der Satelliten (2)
   sowie der Mutter (3) Mittel (9) vorgesehen sind,
   die den Eingriff zwischen Satelliten (2) und Spindel (1) oder Mutter (3) abwechslungsweise zeitweilig unterbrechen.

2) Antrieb nach Anspruch 1, dadurch gekennzeichnet,
   dass die Mittel Ausgleichsnuten (9) in der Mutter
   (3) und/oder der Spindel (1) sind, die den Eingriff
   der Satelliten (2) mit dem Innengewinde (3a) der
   Mutter (3), resp. dem Aussengewinde (1a) der
   Spindel (1) abwechslungsweise kurzfristig unterbrechen.

3) Antrieb nach Anspruch 1, dadurch gekennzeichnet,
   dass die Mittel durch Abflachungen an der Mutter
   (3), resp. den Satelliten (2), resp. der Spindel
   (1) gebildet sind, derart, dass die Satelliten (2)
   abwechslungsweise kurzfristig nurmehr mit einem der
   Elemente Mutter (3) und Spindel (1) in Eingriff
   stehen.

0188402

Fig. 1

Fig. 2

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 049 788  (ROLLVIS S.A.) <br> * Figuren 1-5; Zusammenfassung * | 1 | F 16 H  25/22 |
| A | US-A-3 884 090  (DOCK) <br> *  Spalte 1, Zeile 56 - Spalte 2, Zeile 20; Figuren * | 1 | |
| A | FR-A-2 111 340  (SKF) <br> * Seite 4 * | 1 | |
| A | DE-A-1 931 861  (SKF) <br> * Figur 2 * | 1 | |

--- 

RECHERCHIERTE SACHGEBIETE (Int. Cl.4)

F 16 H

Der vorliegende Recherchenbericht wurde für alle Patentansprüche erstellt.

| Recherchenort | Abschlußdatum der Recherche | Prüfer |
|---|---|---|
| DEN HAAG | 14-04-1986 | MENDE H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82